# EUROPEAN PATENT APPLICATION

(11) **EP 4 145 592 A1**
(43) Date of publication of application: **08.03.2023**
(21) Application number: 22190924.5
(22) Date of filing: 18.08.2022
(51) Int. Cl.: H01M 10/613, H01M 10/647, H01M 10/6556, H01M 50/209, H01M 50/242

(54) **POWER STORAGE DEVICE**

(30) Priority: 07.09.2021 JP 2021145085
(71) Applicant: Prime Planet Energy & Solutions, Inc., Chuo-ku Tokyo 103-0022 (JP)
(72) Inventor: MOGI, Yuya, Tokyo, 103-0022 (JP)
(74) Representative: Kuhnen & Wacker Patent- und Rechtsanwaltsbüro PartG mbB

(57) **Abstract**

A power storage device includes: a stack (100) of a plurality of power storage cells (110) stacked in a first direction; and a case (200) that accommodates the stack (100). The case (200) includes a first portion (210) and a second portion (220) facing respective end surfaces of the stack (100), a third portion (230) and a fourth portion (240) facing respective side surfaces of the stack (100), and a fifth portion (250) and a sixth portion (260) respectively facing an upper surface and a bottom surface of the stack (100). The first portion (210) and the second portion (220) are in abutment with the respective end surfaces of the stack (100), and each receive a force from the stack (100) in the first direction. The stack (100) is supported by the case (200) along the first direction with the force received by the first portion (210) and the second portion (220) in the first direction being transmitted to all of the third portion (230) to the sixth portion (260).

## Description

This nonprovisional application is based on Japanese Patent Application No. 2021-145085 filed on September 7, 2021, with the Japan Patent Office, the entire contents of which are hereby incorporated by reference.

### BACKGROUND OF THE INVENTION

### Field of the Invention

The present technology relates to a power storage device.

### Description of the Background Art

There has been conventionally known a case that can accommodate a stack of battery cells while applying a compressive force to the stack. Such a case is described, for example, in Japanese Patent Laying-Open No. 2020-129474.

It has been required to attain further reduced manufacturing cost, high energy density, and space saving of a power storage device. In view of these, the conventional power storage device does not necessarily have a sufficient configuration.

### SUMMARY OF THE INVENTION

An object of the present technology is to provide a power storage device to attain reduced manufacturing cost, high energy density, and space saving.

A power storage device according to the present technology includes: a stack of a plurality of power storage cells stacked in a first direction; and a case that accommodates the stack. The case includes a first portion and a second portion facing respective end surfaces of the stack along the first direction, a third portion and a fourth portion facing respective side surfaces of the stack along a second direction orthogonal to the first direction, and a fifth portion and a sixth portion respectively facing an upper surface and a bottom surface of the stack along a third direction orthogonal to the first direction and the second direction. The first portion and the second portion are in abutment with the respective end surfaces of the stack, and each receive a force from the stack in the first direction. The stack is supported by the case along the first direction with the force received by each of the first portion and the second portion in the first direction being transmitted to all of the third portion to the sixth portion.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded perspective view of a power storage device according to a first embodiment.
Fig. 2 is a cross sectional view of a bottom surface portion of a case of the power storage device shown in Fig. 1.
Fig. 3 is a diagram showing a state in which the case of the power storage device shown in Fig. 1 is further disassembled.
Fig. 4 is an exploded perspective view showing only the case of the power storage device shown in Fig. 1.
Fig. 5 is a cross sectional view of the power storage device shown in Fig. 1 along a first direction.
Fig. 6 is a diagram showing flows of forces in the case of the power storage device shown in Fig. 1.
Fig. 7 is an exploded perspective view showing only a case of a power storage device according to a second embodiment.
Fig. 8 is an exploded perspective view showing only a case of a power storage device according to a third embodiment.
Fig. 9 is a cross sectional view of the power storage device according to the third embodiment along the first direction.
Fig. 10 is an exploded perspective view showing only a case of a power storage device according to a fourth embodiment.
Fig. 11 is an exploded perspective view showing only a case of a power storage device according to a fifth embodiment.
Fig. 12 is a diagram showing an exemplary joining structure between a side surface portion and a cover surface portion of a case.
Fig. 13 is a diagram showing another exemplary joining structure between the side surface portion and the cover surface portion of the case.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include another battery such as a nickel-metal hydride battery. In the present specification, the term "electrode" may collectively represent a positive electrode and a negative electrode. Further, the term "electrode plate" may collectively represent a positive electrode plate and a negative electrode plate.

In the present specification, when the term "power storage cell" or "power storage device" is used, the term "power storage cell" or "power storage device" is not limited to a battery cell or a battery module, and may include, for example, a capacitor cell or a capacitor.

### (First Embodiment)

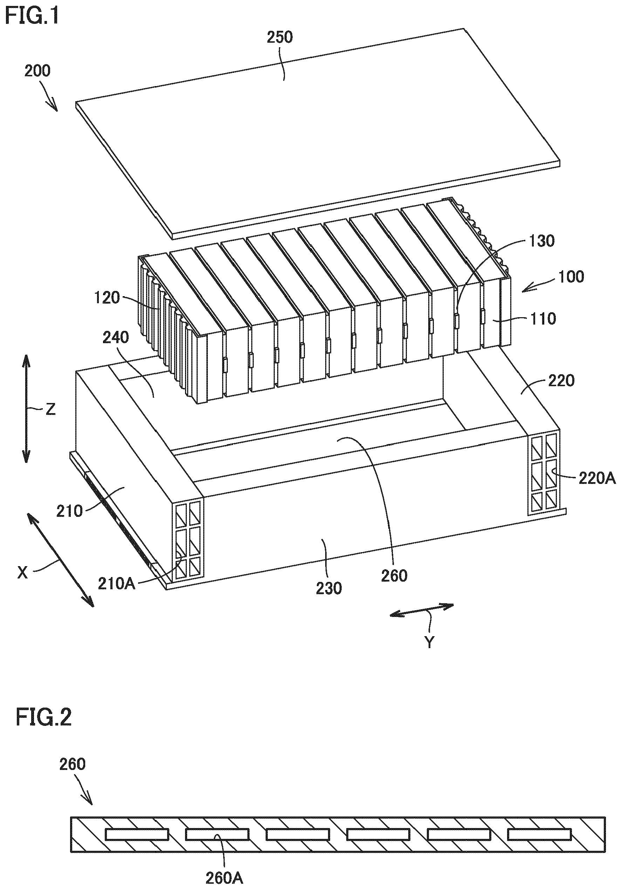

Fig. 1 is an exploded perspective view of a battery pack (power storage device) according to a first embodiment. As shown in Fig. 1, the battery pack includes a stack 100 and a case 200 that accommodates stack 100.

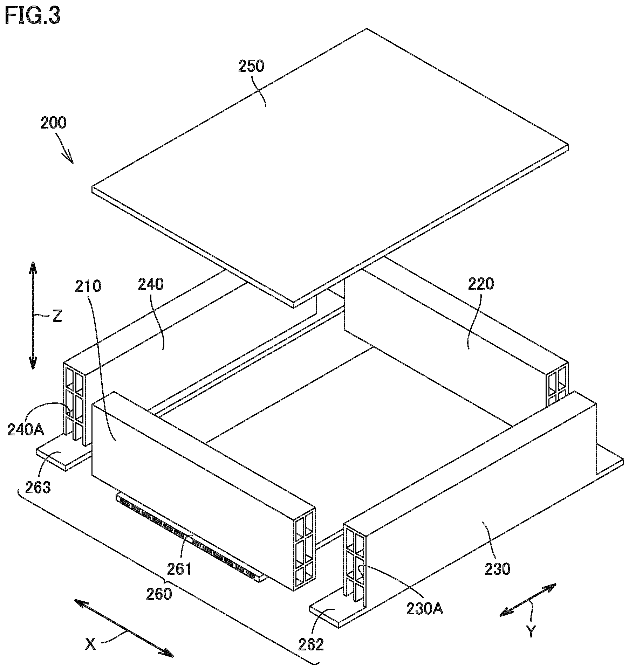

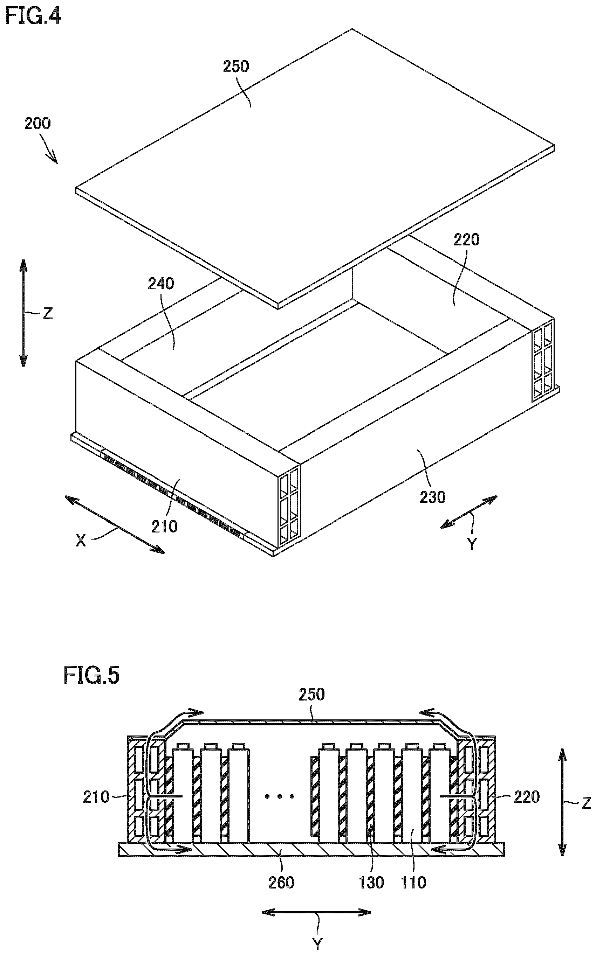

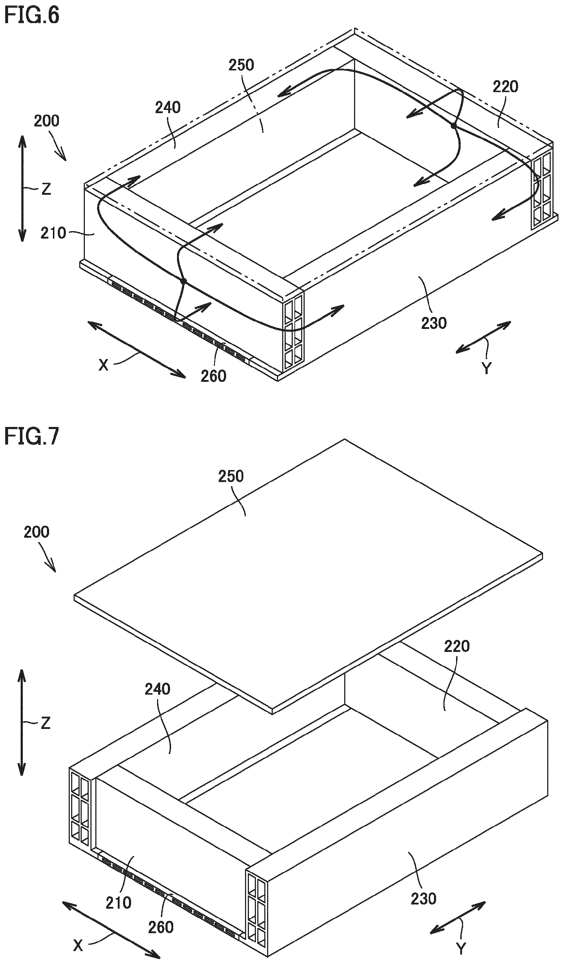

Fig. 2 is a cross sectional view of a bottom surface portion of case 200. Fig. 3 is a diagram showing a state in which case 200 is further disassembled. Fig. 4 is an exploded perspective view showing only case 200. Fig. 5 is a cross sectional view of the battery pack along a Y axis direction. Fig. 6 is a diagram showing flows of forces in case 200. Hereinafter, the battery pack according to the present embodiment will be described with reference to Figs. 1 to 6.

Stack 100 includes a plurality of battery cells 110 (power storage cells) stacked in the Y axis direction (first direction), end separators 120, and inter-cell separators 130.

Case 200 has a substantially rectangular parallelepiped shape. Case 200 includes a first portion 210, a second portion 220, a third portion 230, a fourth portion 240, a fifth portion 250, and a sixth portion 260. First portion 210 and second portion 220 face each other along the Y axis direction (first direction). Third portion 230 and fourth portion 240 face each other along an X axis direction (second direction). Fifth portion 250 and sixth portion 260 face each other along a Z axis direction (third direction). The Y axis direction, the X axis direction, and the Z axis direction are orthogonal to one another.

First portion 210 and second portion 220 face respective end surfaces of stack 100 along the Y axis direction. Each of first portion 210 and second portion 220 has a rectangular shape including a long side along the X axis direction and a short side along the Z axis direction.

First portion 210 and second portion 220 are in abutment with the respective end surfaces of stack 100 in the Y axis direction and each receive a force from stack 100 in the Y axis direction when battery cells 110 are expanded. Battery cells 110, end separators 120, and inter-cell separators 130 between first portion 210 and second portion 220 are accommodated in case 200 with battery cells 110, end separators 120, and inter-cell separators 130 of stack 100 being restrained in the Y axis direction. More specifically, the force received by each of first portion 210 and second portion 220 in the Y axis direction is transmitted to third portion 230, fourth portion 240, fifth portion 250, and sixth portion 260 so as to cause third portion 230 to sixth portion 260 to restrain first portion 210 and second portion 220 in the Y axis direction. Thus, stack 100 is restrained by case 200 along the Y axis direction.

Each of first portion 210 and second portion 220 can be constituted of an extruded member extruded along the X axis direction (long side direction) and composed of a metal such as aluminum. First portion 210 and second portion 220 are respectively provided with a first cavity 210A and a second cavity 220A each extending along the X axis direction. It should be noted that the configurations of first portion 210 and second portion 220 are not limited to those described above.

Third portion 230 and fourth portion 240 can be constituted of an extruded member extruded along the Y axis direction (long side direction) and composed of a metal such as aluminum. Third portion 230 and fourth portion 240 are respectively provided with a third cavity 230A and a fourth cavity 240A each extending along the Y axis direction. It should be noted that the configurations of third portion 230 and fourth portion 240 are not limited to those described above.

The end surfaces of third portion 230 and fourth portion 240 in the Y axis direction are connected to the respective side surfaces of first portion 210 and second portion 220.

Fifth portion 250 is a cover portion that covers the upper surfaces of battery cells 110 provided with electrode terminals (not shown). Fifth portion 250 is coupled to first portion 210 to fourth portion 240, each of which is a side surface portion. Fifth portion 250 is typically constituted of a steel plate, but fifth portion 250 may be constituted of aluminum (extruded member or plate) or a resin.

Sixth portion 260 is a bottom surface portion that covers the bottom surfaces of battery cells 110. The bottom surfaces of battery cells 110 are in contact with sixth portion 260. The term "contact" herein includes the following case: the bottom surfaces of battery cells 110 are adhered and fixed to sixth portion 260.

As shown in Fig. 2, a cooling medium path 260A extending along the Y axis direction is formed in sixth portion 260. That is, sixth portion 260 can serve not only as a bottom plate but also as a cooling plate to cool the cells. Sixth portion 260 can be constituted of an extruded member extruded in the Y axis direction and composed of a metal such as aluminum.

Such aluminum members may be joined together by welding, adhering, or mechanical fastening.

As shown in Fig. 3, sixth portion 260 includes a first bottom surface portion 261, a second bottom surface portion 262, and a third bottom surface portion 263. First bottom surface portion 261 (central portion) is coupled to first portion 210 and second portion 220. Second bottom surface portion 262 (side portion) is coupled to third portion 230. Third bottom surface portion 263 (side portion) is coupled to fourth portion 240. By combining first bottom surface portion 261, second bottom surface portion 262, and third bottom surface portion 263, sixth portion 260 is formed as shown in Fig. 4.

In the battery pack according to the present embodiment, as shown in Figs. 5 and 6, the force received by each of first portion 210 and second portion 220 in the Y axis direction is transmitted to all of third portion 230, fourth portion 240, fifth portion 250, and sixth portion 260. Thus, expanding forces of battery cells 110 can be efficiently received by the whole of the six surfaces of case 200.

Since each of first portion 210 to fourth portion 240 and sixth portion 260 is constituted of the extruded member extruded along the long side direction of the portion, strength of each of the portions can be improved efficiently.

Since each of third portion 230, fourth portion 240, and sixth portion 260 is constituted of the extruded member extruded along the Y axis direction, strength thereof in the Y axis direction can be improved, with the result that larger cell expanding forces can be received.

Further, by employing the structure (Cell to Pack) in which stack 100 of battery cells 110 is directly supported by case 200, the number of components can be reduced.

As a result of the above, with the battery pack according to the present embodiment, cost reduction, high energy density, and space saving can be realized.

### (Second Embodiment)

Fig. 7 is an exploded perspective view showing only a case 200 of a battery pack according to a second embodiment.

The battery pack according to the present embodiment is a modification of the battery pack according to the first embodiment, and has a feature in the following point: end surfaces of first portion 210 and second portion 220 in the X axis direction are coupled to the respective side surfaces of third portion 230 and fourth portion 240. The other points are the same as those in the first embodiment, and therefore will not be described in detail repeatedly.

In the battery pack according to the present embodiment, higher stress is generated at each of corner portions formed by first portion 210, second portion 220, third portion 230, and fourth portion 240 as compared with the battery pack of the first embodiment. Therefore, the structure according to the present embodiment is suitable when the cell expanding force is comparatively small. Further, the structure according to the present embodiment is comparatively readily assembled as compared with the battery pack according to the first embodiment, thereby attaining further reduced manufacturing cost.

With the battery pack according to the present embodiment, cost reduction, high energy density, and space saving can be realized as in the first embodiment.

### (Third Embodiment)

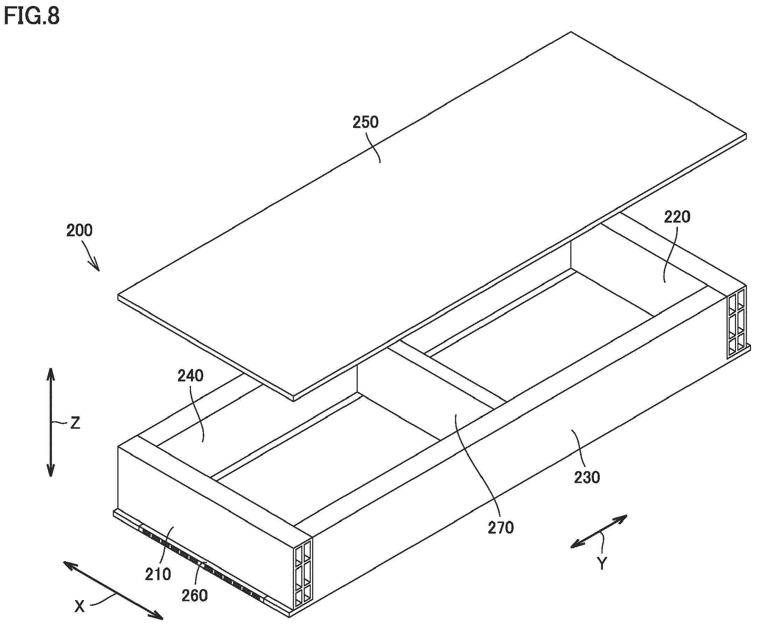

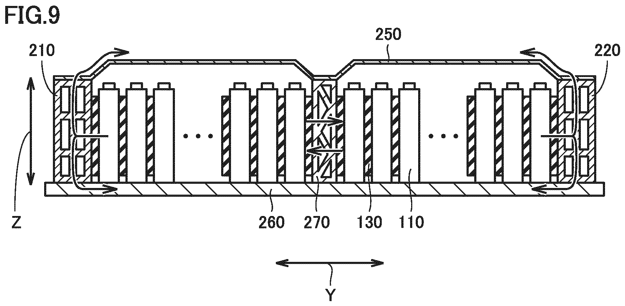

Fig. 8 is an exploded perspective view showing only a case 200 of a battery pack according to a third embodiment. Fig. 9 is a cross sectional view of the battery pack along the Y axis direction.

The battery pack according to the present embodiment is a modification of the battery pack according to each of the first and second embodiments, and has a feature in the following point: a seventh portion 270 (intermediate plate) extending in the X axis direction is provided at the central portion of case 200 in the Y axis direction as shown in Figs. 8 and 9. The other points are the same as those in the first and second embodiments, and therefore will not be described in detail repeatedly.

As shown in Fig. 9, stacks 100 are provided beside the both sides of seventh portion 270 in the Y axis direction. Seventh portion 270 receives and cancels the expanding forces of battery cells 110 from the both sides in the Y axis direction. Fifth portion 250 is fixed to first portion 210 to fourth portion 240 and seventh portion 270.

When a side impact load is input to the battery pack, seventh portion 270 can absorb the side impact force. Further, seventh portion 270 can improve torsional rigidity of case 200.

It should be noted that seventh portion 270 may be provided at the central portion of case 200 in the X axis direction so as to extend in the Y axis direction.

By providing seventh portion 270 (intermediate plate), the number of battery cells 110 mounted on one battery pack is increased, thus making it possible to also deal with a case where the overall length or overall width of case 200 is large.

With the battery pack according to the present embodiment, cost reduction, high energy density, and space saving can be realized as in the first and second embodiments.

### (Fourth Embodiment)

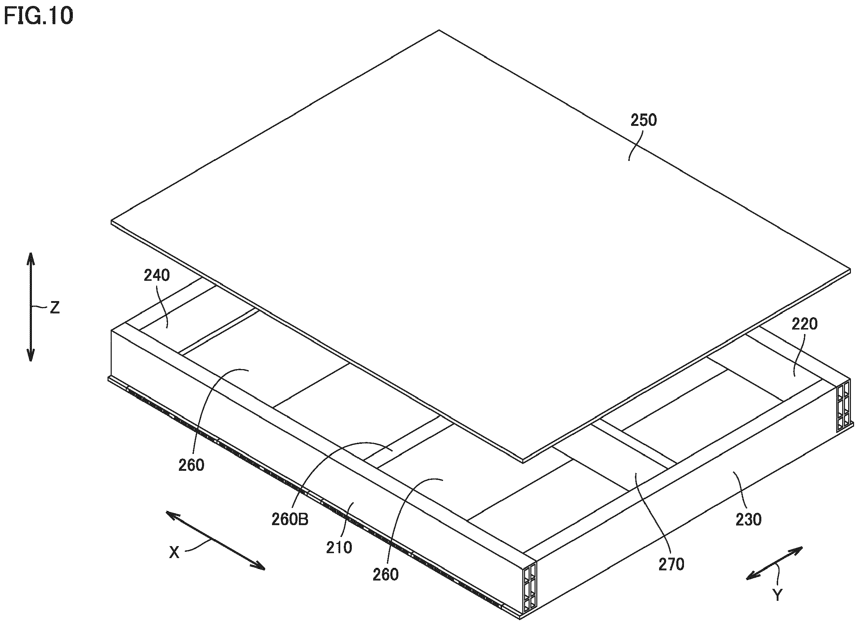

Fig. 10 is an exploded perspective view showing only a case 200 of a battery pack according to a fourth embodiment.

The battery pack according to the present embodiment is a further modification of the battery pack according to the third embodiment, and has a feature in the following point: as shown in Fig. 10, a seventh portion 270 (intermediate plate) extending in the X axis direction is provided at the central portion of case 200 in the Y axis direction (as with the third embodiment), case 200 is increased in size in the X axis direction, and two sixth portions 260 are provided with a spacer 260B being interposed therebetween, spacer 260B being located at the central portion of the X axis direction. The other points are the same as those in the first to third embodiments, and therefore will not be described in detail repeatedly.

By increasing case 200 in size in the X axis direction as well, a larger number of battery cells 110 can be mounted on one battery pack.

With the battery pack according to the present embodiment, cost reduction, high energy density, and space saving can be realized as in the first to third embodiments.

### (Fifth Embodiment)

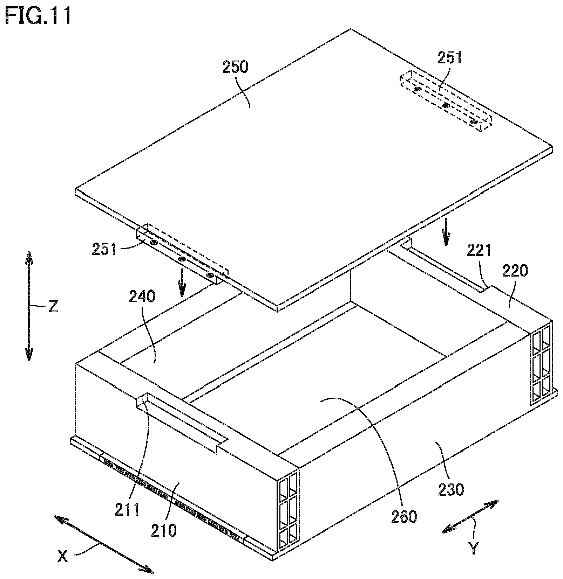

Fig. 11 is an exploded perspective view showing only a case 200 of a battery pack according to a fifth embodiment.

The battery pack according to the present embodiment is a modification of the battery pack according to each of the first to fourth embodiments, and has a feature in the following point: a shear structure is provided between each of first portion 210 and second portion 220 and fifth portion 250 of case 200 as shown in Fig. 11. The other points are the same as those of the first to fourth embodiments, and therefore will not be described in detail repeatedly.

More specifically, fifth portion 250 of case 200 includes contact portions 251 in abutment with first portion 210 and second portion 220 in the Y axis direction. Contact portions 211, 212 (recesses) are formed in first portion 210 and second portion 220, respectively. Contact portions 251 of fifth portion 250 are in abutment with contact portions 211, 212 of first portion 210 and second portion 220 in the Y axis direction.

By providing contact portions 251 in fifth portion 250, forces in the Y axis direction can be efficiently transmitted from first portion 210 and second portion 220 toward the fifth portion, with the result that a larger cell expansion force can be received by case 200.

With the battery pack according to the present embodiment, cost reduction, high energy density, and space saving can be realized as in the first to fourth embodiments.

### (Joining Structure of Cover Surface Portion)

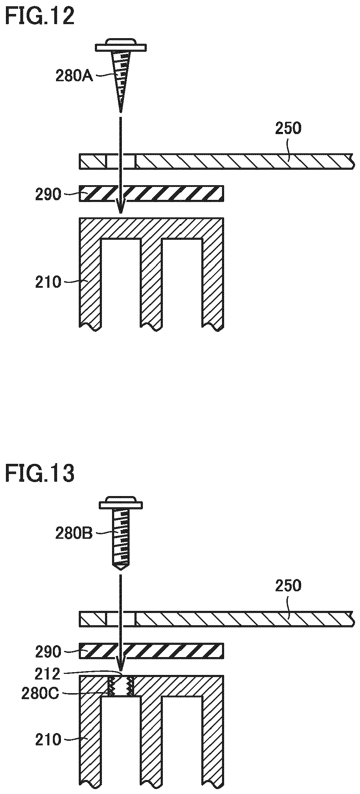

Each of Figs. 12 and 13 is a diagram showing an exemplary joining structure between the side surface portion and cover surface portion of case 200.

In each of the examples shown in Figs. 12 and 13, fifth portion 250 is in abutment with first portion 210 (the same applies to second portion 220 to fourth portion 240) with an adhesive/sealing layer 290 being interposed therebetween. Each of fastening members 280A, 280B extends through fifth portion 250 and are fixed to first portion 210.

Fastening member 280A shown in Fig. 12 is a flow drill screw (FDS). Fastening member 280A fixes fifth portion 250 to first portion 210 while forming an internal thread on the first portion 210 side by plastic flow.

Fastening member 280B shown in Fig. 13 is a bolt or screw, a threaded hole 212 in which a helisert 280C is fitted in advance is formed in first portion 210, and fifth portion 250 is fixed to first portion 210 by inserting fastening member 280B into helisert 280C.

It should be noted that the joining structure between the side surface portion and cover surface portion of case 200 is not limited to the structures shown in Figs. 12 and 13.

Although the embodiments of the present invention have been described and illustrated in detail, it is clearly understood that the same is by way of illustration and example only and is not to be taken by way of limitation, the scope of the present invention being interpreted by the terms of the appended claims. The scope of the present invention is defined by the terms of the claims, and is intended to include any modifications within the scope and meaning equivalent to the terms of the claims.

## Claims

1. A power storage device comprising:
a stack (100) of a plurality of power storage cells (110) stacked in a first direction; and
a case (200) that accommodates the stack (100), wherein
the case (200) includes a first portion (210) and a second portion (220) facing respective end surfaces of the stack (100) along the first direction, a third portion (230) and a fourth portion (240) facing respective side surfaces of the stack (100) along a second direction orthogonal to the first direction, and a fifth portion (250) and a sixth portion (260) respectively facing an upper surface and a bottom surface of the stack (100) along a third direction orthogonal to the first direction and the second direction,
the first portion (210) and the second portion (220) are in abutment with the respective end surfaces of the stack (100), and each receive a force from the stack (100) in the first direction, and
the stack (100) is supported by the case (200) along the first direction with the force received by each of the first portion (210) and the second portion (220) in the first direction being transmitted to all of the third portion (230) to the sixth portion (260).

2. The power storage device according to claim 1, wherein
each of the first portion (210) and the second portion (220) has a rectangular shape including a long side along the second direction and a short side along the third direction, and
each of the first portion (210) and the second portion (220) includes a portion constituted of an extruded member extruded along the second direction.

3. The power storage device according to claim 2, wherein the first portion (210) and the second portion (220) are respectively provided with a first cavity (210A) and a second cavity (220A) each extending along the second direction.

4. The power storage device according to any one of claims 1 to 3, wherein each of the third portion (230) and the fourth portion (240) includes a portion constituted of an extruded member extruded along the first direction.

5. The power storage device according to claim 4, wherein the third portion (230) and the fourth portion (240) are respectively provided with a third cavity (230A) and a fourth cavity (240A) extending along the first direction.

6. The power storage device according to any one of claims 1 to 5, wherein the fifth portion (250) includes a contact portion (251) in abutment with the first portion (210) and the second portion (220) in the first direction.

7. The power storage device according to any one of claims 1 to 6, wherein the sixth portion (260) includes a cooling plate (260) in which a cooling medium path (260A) is formed.

8. The power storage device according to claim 7, wherein the sixth portion (260) includes a portion constituted of an extruded member extruded along the first direction, and the cooling medium path (260A) extends along the first direction.

9. The power storage device according to any one of claims 1 to 8, wherein each of bottom surfaces of the plurality of power storage cells (110) is in contact with the sixth portion (260).
